(19) Europäisches Patentamt
European Patent Office
Office européen des brevets

(11) Veröffentlichungsnummer: **0 122 877**
**A2**

(12) # EUROPÄISCHE PATENTANMELDUNG

(21) Anmeldenummer: **84810118.4**

(22) Anmeldetag: **09.03.84**

(51) Int. Cl.³: **C 10 M 1/48**
C 10 M 3/42, C 07 F 9/165

(30) Priorität: **15.03.83 CH 1403/83**

(43) Veröffentlichungstag der Anmeldung:
**24.10.84 Patentblatt 84/43**

(84) Benannte Vertragsstaaten:
**DE FR GB IT**

(71) Anmelder: **CIBA-GEIGY AG**
**Postfach**
**CH-4002 Basel(CH)**

(72) Erfinder: **Dubas, Henri, Dr.**
**Chemin du Verger 16**
**CH-1752 Villars-sur-Glane(CH)**

(54) **Schmierstoffzusammensetzungen.**

(57) Es werden Schmierstoffzusammensetzungen enthaltend

a) ein mineralisches und/oder synthetisches Basisöl,
b) mindestens eine Verbindung der Formel I

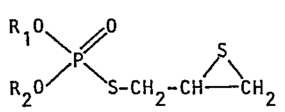

(I),

in welcher $R_1$ und $R_2$ die in Anspruch 1 angegebene Bedeutung haben,

c) weitere Phosphor- und/oder Schwefelverbindungen, welche bei der Synthese der Verbindungen der Formel I als Nebenprodukte entstehen und nicht entfernt werden,

d) gegebenenfalls weitere Schmierstoffzusätze, wobei das Basisöl a) 0,05 bis 5 Gew.-%, bezogen auf das Basisöl, der Verbindung der Formel I enthält,

beschrieben.

Weiterhin wird eine Auswahl aus der Gruppe der Verbindungen der Formel I als Stoffe beansprucht.

EP 0 122 877 A2

Croydon Printing Company Ltd.

CIBA-GEIGY AG
Basel (Schweiz)

3-14353/+

Schmierstoffzusammensetzungen

Die vorliegende Erfindung betrifft Schmierstoffzusammensetzungen, enthaltend Thiophosphorsäureesterderivate, die Verwendung dieser Thiophosphorsäureesterderivate als Schmierstoffzusätze und eine Anzahl dieser Thiophosphorsäurederivate als Stoffe.

Mineralischen und synthetischen Schmierstoffen werden im allgemeinen verschiedene Zusatzstoffe zur Verbesserung ihrer Gebrauchseigenschaften beigegeben. Insbesondere besteht ein Bedarf an Additiven, welche die zu schmierenden Vorrichtungen vor Reibungsabnutzung schützen sollen. An solche Zusätze wird die Anforderung gestellt, dass sie das Lasttragevermögen des Schmierstoffs erhöhen, nicht korrodierend auf die zu schützenden Metallteile wirken und eine gute Hitzebeständigkeit besitzen.

Verschiedenartige Schmierstoffzusätze wurden bereits vorgeschlagen, so beispielsweise verschiedene Dithiophosphorsäurederivate gemäss dem SU-Patent 295 791 oder der DE-PS 2 104 041. Die Eigenschaften von solchen Additiven in Schmierstoffen sind vielfach nicht zufriedenstellend. Insbesondere ist das Lasttragevermögen oder die Hitzebeständigkeit nicht optimal.

Es wurde nun gefunden, dass bestimmte Thiophosphorsäureester der Formel I in mineralischen und synthetischen Schmierstoffen ausgezeichnete Eigenschaften, insbesondere hinsichtlich Lasttragevermögens, Thermostabilität und Aschefreiheit aufweisen.

Die Erfindung betrifft demgemäss Schmierstoffzusammensetzungen enthaltend

a) ein mineralisches und/oder ein synthetisches Basisöl,

b) mindestens eine Verbindung der Formel I

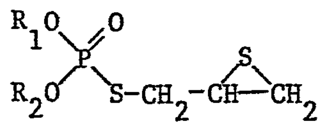

(I), in welcher

$R_1$ und $R_2$ unabhängig voneinander $C_1$-$C_{24}$ Alkyl, das unsubstituiert oder durch 1 oder 2 Chloratome substituiert oder durch 1 oder 2 Sauerstoff- oder Schwefelatome unterbrochen sein kann, $C_5$-$C_{24}$ Cycloalkyl, $C_7$-$C_9$ Aralkyl, unsubstituiertes oder durch 1 bis 3 Reste $C_1$-$C_{24}$ Alkyl, $-OR_3$ oder $-SR_3$ substituiertes Aryl bedeuten, wobei $R_3$ -H, $C_1$-$C_{24}$ Alkyl, unsubstituiertes oder durch $C_1$-$C_{12}$ Alkyl substituiertes Phenyl, Naphthyl oder $C_7$-$C_9$ Aralkyl bedeutet, ferner $R_1$ und $R_2$ unabhängig voneinander eine Gruppe der Formel II

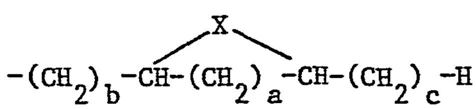

(II) sind,

wobei X für -O-, -S-, -SS- oder $-CH_2S-$ steht, a eine ganze Zahl von 0 bis 5 und b und c eine ganze Zahl von 0 bis 22 sind, mit der Massgabe, dass b + c eine Zahl nicht grösser als 22 darstellt, oder $R_1$ und $R_2$ zusammen $C_2$-$C_{12}$ Alkylen bedeuten, das durch 1 oder 2 Sauerstoff- oder Schwefelatome unterbrochen sein kann, oder $R_1$ und/oder $R_2$ ein zweiwertiger Rest der Formeln III, IV oder V

$-[CH(R_4)CH_2O]_m-A$, (III)  $-(C_nH_{2n})-O-A$, (IV)  $-(C_rH_{2r})-S-(C_rH_{2r})-O-A$ sind, (V)

so dass Oligomere dabei entstehen können, wobei
m eine ganze Zahl von 1 bis 4,

n eine ganze Zahl von 2 bis 10, und
r eine ganze Zahl von 3 bis 18 sind,
$R_4$ -H oder $-CH_3$ bedeutet und
A für den Rest der Formel VI

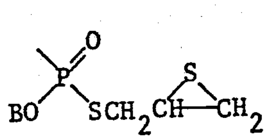

(VI) steht, wobei

B für den Rest $R_1$ oder $R_2$ steht und $R_1$ und $R_2$ einen zweiwertigen Rest der oben angegebenen Bedeutung darstellen, und

c) gegebenenfalls weitere Schmierstoffzusätze,

wobei das Basisöl a) 0,05 bis 5 Gew.-%, bezogen auf das Basisöl, der Verbindung der Formel I enthält.

$R_1$ und $R_2$, sowie $R_3$ in den Resten $-OR_3$ und $-SR_3$ können geradkettiges oder verzweigtes Alkyl sein, beispielsweise Methyl, Aethyl, n-Propyl, Isopropyl, n-Butyl, sec.-Butyl, tert.-Butyl, n-Pentyl, tert.-Pentyl, n-Hexyl, 1-Methylpentyl, n-Octyl, 2-Aethylhexyl, 6-Methylpentyl, 1,1-Dimethylhexyl, n-Decyl, n-Dodecyl, 2-Aethyl-decyl, 1,1,7,7-Tetramethyloctyl, n-Tetradecyl, n-Hexadecyl- n-Octadecyl und Eikosyl. $R_1$ und $R_2$ sind vorzugsweise Alkylgruppen mit 4 bis 16 C-Atomen, $R_3$ insbesondere $C_1$-$C_{12}$ Alkyl.

$R_1$ und $R_2$ als durch Chloratome substituiertes Alkyl sind beispielsweise β-Chloräthyl, 3-Chlorpropyl, 4-Chlorbutyl und 6-Chlorhexyl.

Stellen $R_1$ und $R_2$ durch 1 oder 2 Sauerstoff- oder Schwefelatome unterbrochenes Alkyl dar, so handelt es sich dabei beispielsweise um Alkoxyalkyl- und Alkylthioalkylgruppen, insbesondere Alkoxyalkyl mit insgesamt 3-12 C-Atomen, wie 2-Methoxyäthyl, 2-Aethoxyäthyl, 2-n-Propoxyäthyl, 2-iso-Propoxyäthyl, 2-n-Butoxyäthyl und 2-n-Octoxyäthyl, sowie um Diäthylenglykolmonoalkyläthergruppen wie β-Methoxyäthoxyäthyl, β-Aethoxyäthoxyäthyl und β-n-Butyloxyäthoxyäthyl.

$R_1$ und $R_2$ können Cycloalkyl mit oder ohne Seitenketten sein, worunter geradkettiges oder verzweigtes Alkyl verstanden wird, welche mindestens eine zusätzliche ringbildende Bindung zwischen zwei beliebigen nicht benachbarten Kohlenstoffatomen enthält, wie mono- und polycyclische, einfache, verzweigte, ankondensierte, spiro- oder überbrückte Ring-Radikale.
Beispiele dafür sind Cyclopentyl, Cyclohexyl, Mono-, Di- oder Trimethylcyclohexyl, tert-Butyl-cyclohexyl, Cycloheptyl, Cyclooctyl, Bornyl, Adamantanmethyl, Cedryl oder Cyclododecyl.
Bevorzugt ist Cyclohexyl.

Stehen $R_1$, $R_2$ und $R_3$ für Aralkyl, so kommen beispielsweise Benzyl, Phenyläthyl und Phenylisopropyl in Frage, vorzugsweise Benzyl.

Als Aryl stehen für $R_1$, $R_2$ und $R_3$ beispielsweise Phenyl, $\alpha$- und $\beta$-Naphthyl in Frage, insbesondere aber Phenyl.

Ist Aryl als $R_1$ und $R_2$ durch 1 bis 3 Alkylgruppen substituiert, so handelt es sich beispielsweise um 2- und 4-Tolyl, 2,4-Dimethylphenyl, 2,4-di-tert.-Butylphenyl oder 2-Methyl-6-tert.-butylphenyl.

Stellen $R_1$ und $R_2$ durch $-OR_3$ oder $-SR_3$ substituiertes Aryl dar, so handelt es sich dabei beispielsweise um 4-Hydroxyphenyl, 4-Thiophenyl, 4-Methoxyphenyl, 4-Methylthiophenyl, 4-Phenoxyphenyl oder p-tert.-Butylphenoxyphenyl.

Bilden $R_1$ und $R_2$ zusammen Alkylen mit 2-12 C-Atomen, so ist dies geradkettig oder verzweigt, insbesondere gegebenenfalls einfach oder mehrfach $C_1$-$C_4$-alkyliertes Aethylen oder Propylen-1,3, vor allem ein- oder mehrfach methyliertes Propylen-1,3, wie Aethylen, Propylen-1,3, Butylen-1,4, 2-Methylpropylen-1,3, 2,2-Dimethylpropylen-1,3, 1,1,3-Trimethylpropylen-1,3, oder 2-Aethyl-2-n-butylpropylen-1,3.

Stellen $R_1$ und $R_2$ einen zweiwertigen Rest $-[CH(R_4)CH_2-O]_m-$ gemäss der Formel III dar, so handelt es sich bei $-OR_1$ und $-OR_2$ beispielsweise um Polyäthylenglykolat- und Polypropylenglykolatreste wie Diäthylenglykolat, Triäthylenglykolat, Tetraäthylenglykolat oder Dipropylenglykolat.

Sind $R_1$ und $R_2$ ein zweiwertiger Rest $-(C_nH_{2n})-$ in der Formel IV, so handelt es sich dabei um geradkettige und verzweigte Alkylengruppen, beispielsweise um Aethylen, Propylen, Butylen, Pentylen, Hexamethylen oder 2-Aethyläthylen.

Stellen $R_1$ und $R_2$ einen zweiwertigen Rest $-(C_rH_{2r})-S-(C_rH_{2r})-O-$ gemäss der Formel V dar, so handelt es sich dabei um geradkettige oder verzweigte Alkylengruppen, welche über ein Schwefelatom gebunden sind. Beispiele sind:

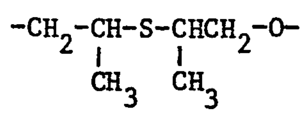
,

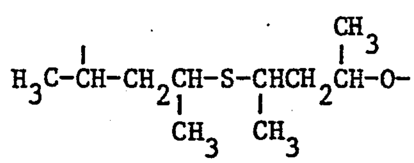
,

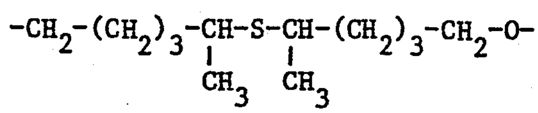
und

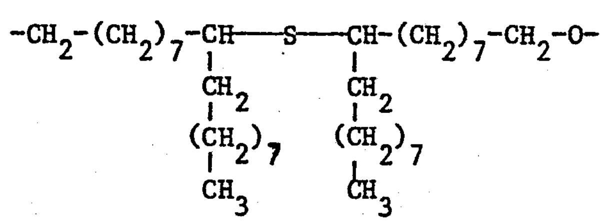
.

Stellen $R_1$ und $R_2$ eine Gruppe der Formel II dar, so handelt es

sich dabei beispielsweise um Thiiranyl, 3-Thietanyl, 2-Tetrahydrofurfuryl oder 4-Tetrahydropyranyl.

Bevorzugt sind solche Schmierstoffzusammensetzungen, welche mindestens eine Verbindung der Formel I enthalten, in welcher $R_1$ und $R_2$ unabhängig voneinander $C_1$-$C_{24}$ Alkyl, das unsubstituiert oder durch 1 oder 2 Sauerstoff- oder Schwefelatome unterbrochen sein kann, $C_5$-$C_{24}$ Cycloalkyl, Benzyl oder unsubstituiertes oder durch 1 bis 3 Reste $C_1$-$C_{12}$-Alkyl, $-OR_3$ oder $-SR_3$ substituiertes Phenyl, wobei $R_3$ -H, $C_1$-$C_{24}$ Alkyl, unsubstituiertes oder durch $C_1$-$C_{12}$ Alkyl substituiertes Phenyl ist, oder $R_1$ und $R_2$ unabhängig voneinander Thiiranyl oder 3-Thietanyl oder einen Rest der Formel IV darstellen wobei B $C_4$-$C_{16}$ Alkyl, Cyclohexyl oder Phenyl, oder $R_1$ und $R_2$ zusammen $C_5$-$C_{12}$ Alkylen bedeuten, das durch 1 oder 2 Sauerstoff- oder Schwefelatome unterbrochen sein kann.

Besonders bevorzugt sind solche Schmierstoffzusammensetzungen, welche mindestens eine Verbindung der Formel I enthalten, in welcher $R_1$ und $R_2$ unabhängig voneinander $C_4$-$C_{16}$ Alkyl, Cyclohexyl, Phenyl oder einen Rest der Formel IV bedeuten, wobei B $C_4$-$C_{16}$ Alkyl, Cyclohexyl oder Phenyl ist, oder $R_1$ und $R_2$ zusammen $C_5$-$C_9$ Alkylen bedeuten.

Weiterer Gegenstand der Erfindung sind Verbindungen der Formel I*

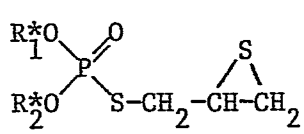

(I*), in welcher

$R_1^*$ und $R_2^*$ unabhängig voneinander $C_1$-$C_{24}$ Alkyl, das durch 1 oder 2 Sauerstoff- oder Schwefelatome unterbrochen sein kann, jedoch nicht beide gleichzeitig $C_1$-$C_{24}$ Alkyl, wenn das $C_1$-$C_{24}$ Alkyl nicht durch wenigstens 1 Sauerstoff- oder Schwefelatom unterbrochen ist,

oder in welcher ferner $R_1^*$ und $R_2^*$ unabhängig voneinander $C_5$-$C_{24}$ Cycloalkyl, $C_7$-$C_9$ Aralkyl, unsubstituiertes oder durch 1 bis 3 Reste $C_1$-$C_{24}$ Alkyl, $-OR_3$ oder $-SR_3$ substituiertes Aryl bedeuten, wobei $R_3$ -H, $C_1$-$C_{24}$ Alkyl, unsubstituiertes oder durch $C_1$-$C_{12}$ Alkyl substituiertes Phenyl, Naphthyl oder $C_7$-$C_9$ Aralkyl bedeutet, ferner $R_1^*$ und $R_2^*$ unabhängig voneinander eine Gruppe der Formel II

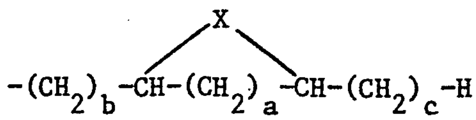

(II) sind,

wobei X für -O-, -S-, -SS- oder $-CH_2S-$ steht, a eine ganze Zahl von 0 bis 5 und b und c eine ganze Zahl von 0 bis 22 sind, mit der Massgabe, dass b + c eine Zahl nicht grösser als 22 darstellt, oder $R_1^*$ und $R_2^*$ zusammen $C_2$-$C_{12}$ Alkylen bedeuten, das durch 1 oder 2 Sauerstoff- oder Schwefelatome unterbrochen sein kann, oder $R_1^*$ und/oder $R_2^*$ ein zweiwertiger Rest der Formeln III, IV oder V

$-[CH(R_4)CH_2O\text{-}]_m\text{-}A$, (III) $\quad -(C_nH_{2n}\text{-})\text{-}O\text{-}A$, (IV) $\quad -(C_rH_{2r}\text{-})\text{-}S\text{-}(C_rH_{2r}\text{-})\text{-}O\text{-}A$ (V) sind,

so dass Oligomere dabei entstehen können, wobei

m eine ganze Zahl von 1 bis 4,

n eine ganze Zahl von 2 bis 10, und

r eine ganze Zahl von 3 bis 18 sind,

$R_4$ -H oder $-CH_3$ bedeutet und

A für den Rest der Formel VI

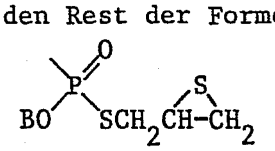

(VI) steht, wobei

B für den Rest $R_1^*$ oder $R_2^*$ steht und $R_1^*$ und $R_2^*$ einen zweiwertigen Rest der oben angegebenen Bedeutung darstellen.

Bevorzugt sind Verbindungen der Formel $I^*$, in welcher $R_1^*$ $C_1$-$C_{24}$ Alkyl, $C_5$-$C_{24}$ Cycloalkyl, Benzyl, unsubstituiertes oder durch 1 bis 3 Reste $C_1$-$C_{12}$ Alkyl substituiertes Phenyl, Thiiranyl oder 3-Thietanyl bedeutet, und $R_2^*$ $C_5$-$C_{24}$ Cycloalkyl, Benzyl, unsubstituiertes oder durch 1 bis 3 Reste $C_1$-$C_{12}$ Alkyl unsubstituiertes Phenyl ist oder einen Rest der Formel VII

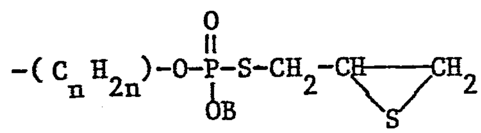

(VII)

darstellt, worin B für den Rest $R_1^*$ steht und n eine natürliche Zahl von 2 bis 10 ist, oder in welcher $R_1^*$ und $R_2^*$ zusammen $C_5$-$C_{12}$ Alkylen bedeuten, das durch 1 oder 2 Sauerstoff- oder Schwefelatome unterbrochen sein kann.

Besonders bevorzugt sind Verbindungen der Formel $I^*$, in welcher $R_1^*$ $C_4$-$C_{16}$ Alkyl, unsubstituiertes oder durch $C_1$-$C_{12}$ Alkyl substituiertes Cyclohexyl oder Phenyl ist, und $R_2^*$ unsubstituiertes oder durch $C_1$-$C_{12}$ Alkyl substituiertes Cyclohexyl oder Phenyl ist oder einen Rest der Formel VII

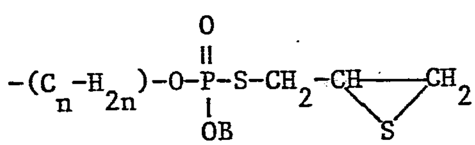

(VII)

darstellt, worin B für den Rest $R_1^*$ steht und n eine natürliche Zahl von 2 bis 10 ist.

Die beispielhafte Ausdeutung für die in der Formel I auftretenden Reste soll bis auf die Abweichungen ebenso für die in der Formel I* auftretenden Reste gelten.

Beispiele für einzelne Verbindungen der Formel I* sind:

S-Thiiranylmethyl-O,O' -di-3-oxa-pentyl-thiophosphat,
S-Thiiranylmethyl-O,O'-dicyclohexyl-thiophosphat,
S-Thiiranylmethyl-O,O'-diphenyl-thiophosphat,
S-Thiiranylmethyl-O,O'-neopentan-1,3-diyl-thiophosphat,
S-Thiiranylmethyl-O,O'-di-sec-butyl-thiophosphat,
S-Thiiranylmethyl-O,O'-2-aethyl-2-butyl-propan-1,3-diyl-thiophosphat,
S-Thiiranylmethyl-O-cyclohexyl-O'-neopentyl-thiophosphat,
S-Thiiranylmethyl-O-2-aethylhexyl-O'-cyclohexyl-thiophosphat,
O,O-2-Aethyl-2-butyl-propan-1,3-diyl-bis(O'-cyclohexyl-S-thiiranylmethyl-thiophosphat),
S-Thiiranylmethyl-O,O'-di-4-tert-butylcyclohexyl-thiophosphat,
S-Thiiranylmethyl-O,O'-di-3,3,5-trimethylcyclohexyl-thiophosphat,
S-Thiiranylmethyl-O-cyclohexyl-O'-3,3,5-trimethylcyclohexyl-thiophosphat,
S-Thiiranylmethyl-O-cyclohexyl-O'-4-tert-butylcyclohexyl-thiophosphat.

Da die neuen Verbindungen der Formel $I^*$ unter die Verbindungen der Formel I fallen, gilt das für die Verbindungen der Formel I offenbarte allgemeine Material ebenso für die Verbindungen der Formel $I^*$.

Einige Verbindungen der Formel I sind bekannte Produkte. Ihre Herstellung erfolgt nach bekannten Verfahren, beispielsweise gemäss C.A. 72 (1970), 111178v durch Umsetzung von O,O'-disubstituierten Dithiophosphorsäuren mit Epichlorhydrin und einer Base oder aber gemäss C.A. 85 (1976), 5430e durch Umsetzung von Thioepichlorhydrin mit Natrium-O,O'-disubstituierten-thiophosphorsäuren oder auch gemäss DE-AS 1 082 915 durch Umsetzung von 1 Mol Epichlorhydrin mit mindestens 2 Mol eines wasserlöslichen Salzes einer Dialkylthiol- bzw. Dialkylthionothiolphosphorsäure in wässeriger Lösung oder aber gemäss Bull. Academ. Sciences USSR (1982) 2081.

Andere Verbindungen der Formel I sind neu und daher auch Gegenstand der Erfindung. Ihre Herstellung erfolgt in Analogie zu den für die bekannten Verbindungen angegebenen Verfahren.

Man kann aber die Verbindungen der Formel I auch direkt aus Tetraphosphordecasulfid herstellen, indem zunächst mit einem Alkohol der Formel $R_1OH$ oder $R_2OH$ bzw. Gemische davon umgesetzt wird, dann die resultierende Dithiophosphorsäure mit Epichlorhydrin und einer Base weiter umgesetzt wird.

Oligomere der Formel I werden beispielsweise erhalten durch Umsetzung von Tetraphosphordecasulfid mit einem Alkohol der Formel $R_1OH$ oder $R_2OH$ enthaltend eine $>C=C<$ Bindung zur entsprechenden Dithiophosphorsäure, die dann mit Epichlorhydrin und durch anschliessende Verschwefelung der $>C=C<$ Bindung(en) zu Oligomeren der Formel I umgesetzt wird.

Beispiele für Verbindungen der Formel I sind folgende Substanzen:

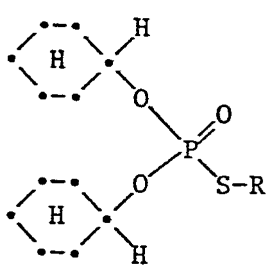

,

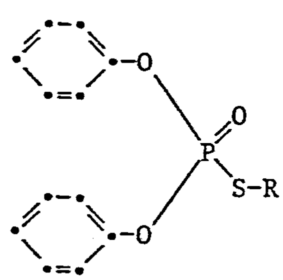

,

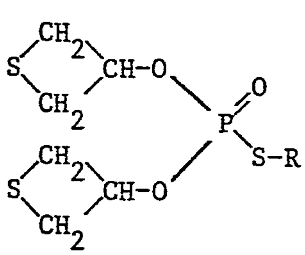

,

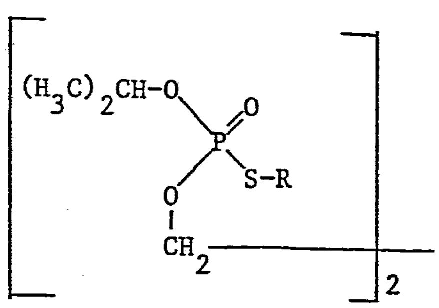

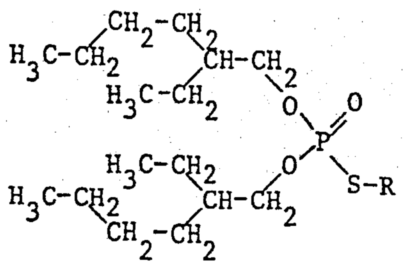 ,

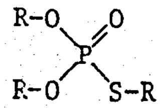 ,

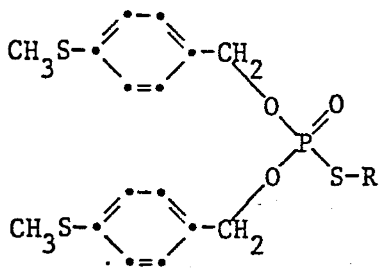 ,

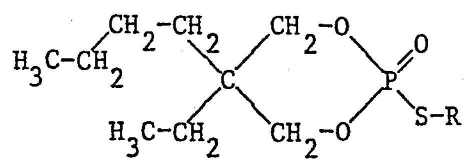 ,

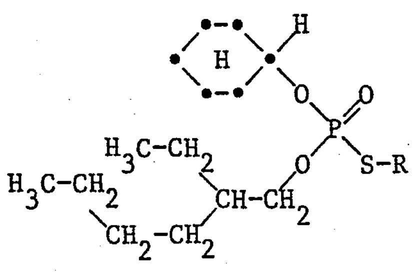

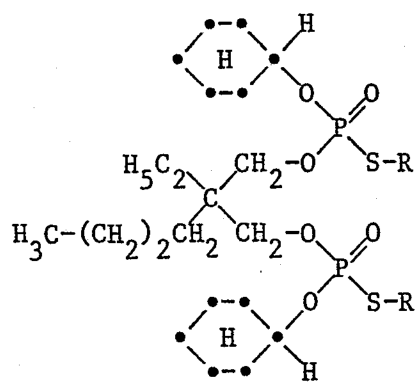 ,

oder

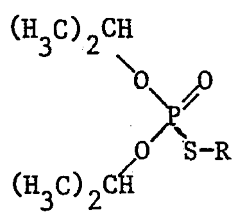

wobei R für die Gruppe der Formel 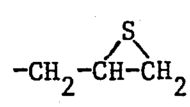 steht.

Die Verbindungen der Formel I können roh eingesetzt werden, so wie sie bei ihrer Synthese anfallen. Sie können auch vor ihrem Gebrauch als Schmierstoffzusatz gereinigt werden. Nebenprodukte, welche bei ihren Synthesen entstehen, sind beispielsweise Dithiophosphorsäureester der Formeln

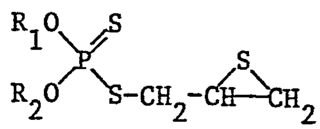

,

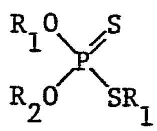

oder

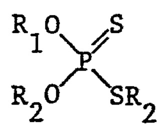

,

wobei die Reste $R_1$ und $R_2$ die oben angebene Bedeutung haben.

Bei den weiteren Schmierstoffzusätzen c), die zwecks Verbesserung gewisser Gebrauchseigenschaften gegebenenfalls der erfindungsgemässen Schmierstoffzusammensetzung zugegeben werden, handelt es sich bevorzugt um Antioxidantien, Metallpassivatoren, Rostinhibitoren, Viskositätsindex-Verbesserer, Stockpunkterniedriger und Dispergierungsmittel/ Detergentien, Verdicker sowie bekannte Antiverschleissmittel, Hochdruckmittel und Reibungsverminderer.

Die eingesetzte Menge dieser Zusätze ist nicht beschränkt. Sie hängt von der chemischen Struktur der Zusätze und vom Anwendungsgebiet ab und ist dem Fachmann bekannt. Vorzugsweise werden mehrere derartige Zusätze kombiniert, um optimale Eigenschaften zu erhalten.

<u>Beispiele für Antioxidantien sind:</u>

a) Alkylierte und nicht-alkylierte aromatische Amine und Mischungen davon, z.B.

Dioctyldiphenylamin, Mono-t-octylphenyl-α- und -β-napthylamine, Phenothiazin, Dioctylphenothiazin, Phenyl-α-naphthylamin, N,N'-Di-sec.-butyl-p-phenylendiamin.

b) Sterisch gehinderte Phenole, z.B. 2,6-Di-tert.-butyl-p-cresol, 4,4'-Bis-(2,6-diisopropylphenol), 2,4,6-Triisopropylphenol, 2,2'-Thiobis-(4-methyl-6-tert.-butylphenol), 4,4'-Methylen-bis-(2,6-di-tert.-butylphenol).

c) Alkyl-, Aryl- oder Alkaryl-phosphite, z.B.: Trinonylphosphit, Triphenylphosphit, Diphenyldecylphosphit.

d) Ester von Thiodipropionsäure oder Thiodiessigsäure, z.B.: Dilaurylthiodipropionat oder Dioctylthiodiacetat.

e) Salze von Carbamin- und Dithiophosphorsäuren, z.B.: Antimon-diamyldithiocarbamat, Zink-diamyldithiophosphat.

f) Kombination von zwei oder mehr Antioxidantien der obigen Additive, z.B.: ein alkyliertes Amin und ein sterisch gehindertes Phenol.

Beispiele für Metallpassivatoren sind:

a) für Kupfer, z.B. Benzotriazol, Tetrahydrobenzotriazol, 2-Mercaptobenzotriazol, 2,5-Dimercaptothiadiazol, Salicylidenpropylendiamin, Salze von Salicylaminoguanidin.

b) für Blei, z.B. Sebacinsäurederivate, Chinizarin, Propylgallat,

c) Kombination von zwei oder mehr der obigen Additive.

Beispiele für Rost-Inhibitoren sind:

a) Organische Säuren, ihre Ester, Metallsalze und Anhydride, z.B.: N-Oleoyl-sarcosin, Sorbitan-mono-oleat, Blei-naphthenat, Dodecenylbernsteinsäure-anhydrid.

b) Stickstoffhaltige Verbindungen, z.B.:
I. Primäre, sekundäre oder tertiäre aliphatische oder cycloaliphatische Amine und Amin-Salze von organischen und anorganischen Säuren, z.B. öllösliche Alkylammoniumcarboxylate.

II. Heterocyclische Verbindungen, z.B.:
Substituierte Imidazoline und Oxazoline.

c) Phosphorhaltige Verbindungen, z.B:
Aminsalze von Phosphorsäure-partialestern.

d) Schwefelhaltige Verbindungen, z.B.:
Barium-dinonylnaphthalin-sulfonate, Calciumpetroleumsulfonate.

e) Kombinationen von zwei oder mehr der obigen Additive.

Beispiele für Viskositätsindex-Verbesserer sind z.B.:

Polymethacrylate, Vinylpyrrolidon/Methacrylat-Copolymere, Polybutene, Olefin-Copolymere, Styrol/Acrylat-Copolymere.

Beispiele für Stockpunkterniedriger sind z.B.:

Alkylierte Naphthaline, alkylierte Phenole, Polymethacrylate.

Beispiele für Detergentien und Dispergierungsmittel

sind Polyalkenylbernsteinsäureimide, öllösliche Metallseifen wie Ca-, Ba-, Mg- und Al-Carboxylate, -Phenolate oder -Sulfonate.

Beispiele für andere Verschleisschutz-Additive sind z.B.:

Schwefel und/oder Phosphor und/oder Halogen enthaltende Verbindungen, wie geschwefelte vegetabilische Oele, Zinkdialkyldithiophosphate, Tritolyl-phosphat, chlorierte Paraffine, Dialkyl- und Diaryldisulfide, Dialkyl- und Diarylpolysulfide.

Weiterer Gegenstand der Erfindung ist auch die Verwendung von Verbindungen der Formel I als Schmierstoffzusätze in Schmierstoffen, insbesondere in Schmierölen und -fetten.

Die in Frage kommenden Schmierstoffe sind dem Fachmann geläufig und z.B. im "Schmiermittel Taschenbuch" (Hüthig Verlag, Heidelberg, 1974) beschrieben.

Werden mehrere Verbindungen der Formel I gleichzeitig erfindungsgemäss verwendet, so werden diese Verbindungen einzeln oder im Gemisch dem Basisöl zugemischt.

Die Verbindungen der Formel I wirken schon in sehr geringen Mengen als Hochdruck-Zusätze in Schmierstoffen. So zeigen mineralische und synthetische Schmieröle, sowie deren Gemische, welche mit 0,05 bis 5 Gew.-%, bezogen auf den Schmierstoff, und vorzugsweise 0,1 bis 3 Gew.-% einer Verbindung der Formel I ausgestattet sind, ausgezeichnete Hochdruck-Schmiereigenschaften. So zeichnen sich die erfindungsgemässen Schmierstoffzusammensetzungen insbesondere durch ein gutes Lasttragevermögen, einen geringen Verschleiss und eine geringe Reibung aus. Zudem besitzen sie eine gute Hitzebeständigkeit und Aschefreiheit.

Die erfindungsgemässen Schmierstoffzusammensetzungen finden Anwendung insbesonders in Hydraulikölen, Getriebe- und Motorenölen, Schmierfetten sowie in Metallbearbeitungsölen.

Die folgenden Beispiele erläutern die Erfindung. Teile und Prozente bedeuten Gewichtsteile bzw. Gewichtsprozente.

Beispiel 1: Zu 20,4 Teilen O,O'-Di(3-oxa-pentyl)-dithiophosphorsäure (aus Aethylcellosolve und Diphosphorpentasulfid hergestellt) werden bei Raumtemperatur 7 Teile Epichlorhydrin innerhalb 1 Stunde zugetropft, wobei eine leichte Kühlung nötig ist. Nach 2 weiteren Stunden bei Raumtemperatur werden 4,4 Teile Kalilauge (in 56 Teilen Aethylcellosolve gelöst) zugegeben. Das Reaktionsgemisch wird 1 Stunde auf 90°C erwärmt und teilweise eingeengt. Der Rückstand wird in Toluol aufgenommen, mit Wasser gewaschen und durch Säulenchromatographie auf Kieselgel gereinigt. Man erhält 16,7 Teile eines orangen Oeles der Formel

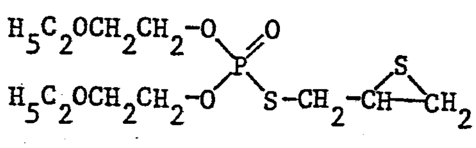

.

Beispiel 5: Zu 21,7 Teilen 0,0'-Dicyclohexyl-dithiophosphorsäure (aus Cyclohexanol und Diphosphorpentasulfid hergestellt) werden unter Kühlung auf 10-12°C 7 Teile Epichlorhydrin innerhalb einer Stunde zugetropft, dann wird 17 Std. bei 20°C weitergerührt. Dieser Lösung werden nacheinander 17 Teile Toluol und 15 Teile Triäthylamin zugesetzt, dann wird die Reaktionsmasse $2\frac{1}{2}$ Std. unter Rückfluss erhitzt. Nach Abkühlung auf Raumtemperatur wird vom entstandenen Niederschlag filtriert. Das Filtrat wird mit Toluol verdünnt, mehrmals mit Wasser gewaschen und eingedampft, wobei 25 Teile eines orangen Oeles zurückbleiben. Durch Säulenchromatographie auf Kieselgel werden 20 Teile eines gelben Oeles erhalten, welches nach Verdünnung mit 30 Teilen Siedegrenzebenzin kristallisiert. Man erhält 13,2 Teile einer farblosen kristallinen Substanz vom Schmelzpunkt 62-64° der Formel

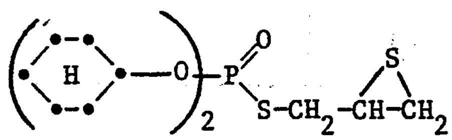

Beispiele 1 bis 17: Analog dem in Beispiel 1 und Beispiel 5 beschriebenen Verfahren werden weitere Verbindungen der Formel I hergestellt, die unter anderem in Tabelle I zusammengestellt sind.

Tabelle 1

| Beispiel Nr. | Struktur der Verbindungen der Formel I | Aspekt | Schmelzpunkt; $^{31}$P-NMR [δ in ppm]; Verbrennungsanalyse (in %): berechnet/ gefunden |
|---|---|---|---|
| 1 | 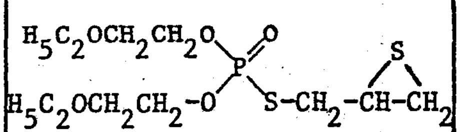 | orangenes Oel | C 39,99 C 40,2<br>H 7,02 H 6,8<br>S 19,41 S 19,7<br>P 9,38 P 9,0 |
| 2 | 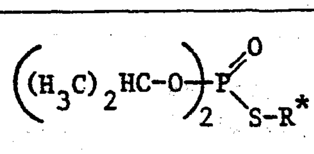 | hellgelbes Oel | $^{31}$P-NMR: δ=24,1ppm<br>C 39,99 C 40,2<br>S 23,72 S 23,2<br>P 11,46 P 11,4<br>H 7,09 H 7,1 |

Tabelle 1 (Fortsetzung)

| Beispiel Nr. | Struktur der Verbindungen der Formel I | Aspekt | Schmelzpunkt $^{31}$P-NMR [δ in ppm]; Verbennungsanalyse (in %): berechnet / gefunden |
|---|---|---|---|
| 3 | 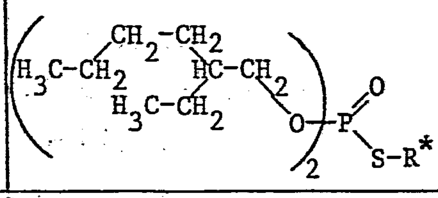 | farbloses Oel | C 55,58 C 55,7<br>H 9,58 H 9,5<br>S 15,62 S 15,2<br>P 7,54 P 7,54 |
| 4 | 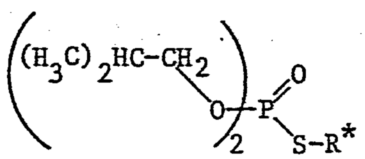 | helles Oel | C 41,94 C 42,3<br>H 8,09 H 8,0<br>S 22,39 S 22,6<br>P 10,82 P 10,7 |
| 5 | 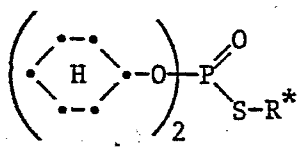 | farblose Kristalle | Smp. = 62-64°C<br>C 51,41 C 51,6<br>H 7,77 C 7,3<br>S 18,30 S 17,9<br>P 8,84 P 8,7 |
| 6 | 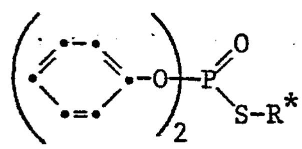 | hellbraunes Oel | C 53,24 C 53,85<br>H 4,47 H 4,65<br>S 18,45 S 18,25<br>P 9,15 P 9,05 |
| 7 | 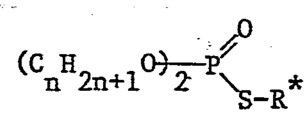<br>[n = 4,7; Gemisch aus n = 3, 4 und 8] | helles Oel | C 47,34 C 47,1<br>H 8,26 H 8,1<br>S 19,90 S 19,9 |
| 8 | 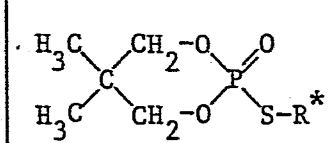 | farblose Kristalle | Smp. = 95-96,5°C<br>C 37,79 C 38,1<br>H 5,95 H 5,58<br>S 25,22 S 25,2<br>P 12,18 P 12,25 |
| 9 | 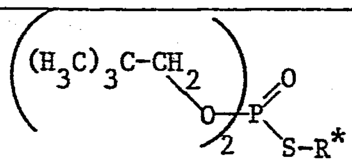 | farblose Kristalle | Smp. = 35-39°C<br>C 47,83 C 48,0<br>H 8,34 H 8,4<br>S 19,64 S 20,0<br>P 9,49 P 9,4 |

Tabelle 1: (Fortsetzung)

| Beispiel Nr. | Struktur der Verbindungen der Formel I | Aspekt | Schmelzpunkt; $^{31}$P-NMR [δ in ppm]; Verbrennungsanalyse (in %): berechnet / gefunden |
|---|---|---|---|
| 10 | 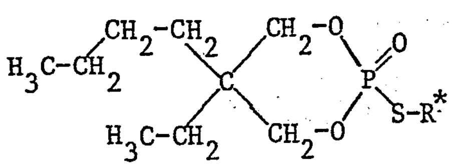 | hellgelbes Oel | C 46,43 C 46,3<br>H 7,45 H 7,5<br>S 20,66 S 19,9<br>P 9,98 P 9,8 |
| 11 | 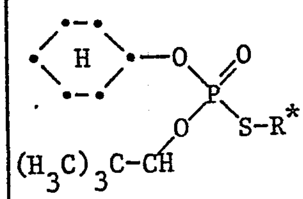 | farbloses Oel, kristallisiert bei längerem Stehen | Smp. = 29-32°C |
| 12 | Gemisch aus:<br>60% der Verbindung von Beispiel Nr. 5,<br>6% der Verbindung von Beispiel Nr. 3<br>und 10% von<br>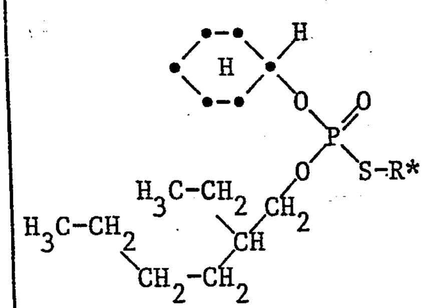 | farbloser Festkörper | Smp.=39-41°C |

Tabelle 1 (Fortsetzung)

| Bei-spiel Nr. | Struktur der Verbindungen der Formel I | Aspekt | Schmelzpunkt $^{31}$P-NMR [δ in ppm]; Verbennungsanalyse (in %): berechnet / gefunden |
|---|---|---|---|
| 13 | Gemisch aus:<br>60% der Verbindung von Beispiel Nr. 5,<br>10% der Verbindung von Beispiel Nr. 10<br>und 30% von<br>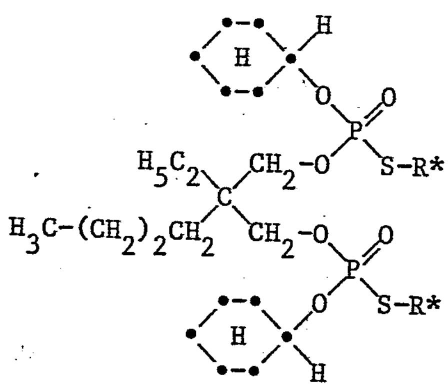 | farbloses Harz | |
| 14 | 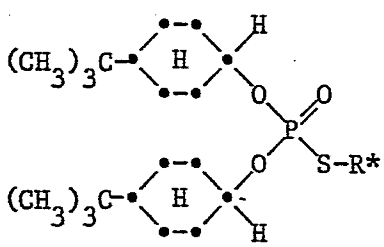 | trübes, viskoses Oel | C 59,71 C 59,87<br>H 9,37 H 9,39<br>S 13,86 S 13,58 |
| 15 | 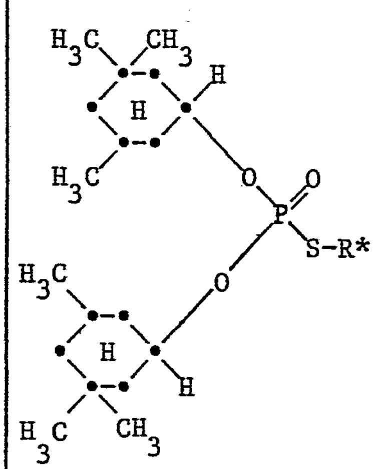 | sehr viskoses, farbloses Harz | C 58,03 C 57,86<br>H 9,04 H 9,00<br>S 14,75 S 14,56 |

Tabelle 1: (Fortsetzung)

<table>
<tr><th>Bei-<br>spiel<br>Nr.</th><th>Struktur der Verbindungen<br>der Formel I</th><th>Aspekt</th><th>Schmelzpunkt;<br>$^{31}$P-NMR [δ in ppm];<br>Verbrennungsana-<br>lyse (in %):<br>berechnet / gefunden</th></tr>
<tr><td>16</td><td>Gemisch aus:<br>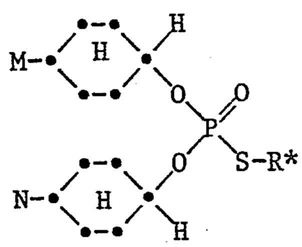<br>wobei<br><table><tr><td>M</td><td>H</td><td>H</td><td>t-Butyl</td></tr><tr><td>N</td><td>H</td><td>t-Butyl</td><td>t-Butyl</td></tr></table><br>(Anmerkung: hergestellt aus<br>1 Mol Cyclohexanol und<br>1 Mol 4-t-Butylcyclohexanol)</td><td>leicht<br>gelbliche<br>Flüssigkeit</td><td></td></tr>
</table>

Tabelle 1: (Fortsetzung)

<table>
<tr><th>Beispiel Nr.</th><th>Struktur der Verbindungen der Formel I</th><th>Aspekt</th><th>Schmelzpunkt; $^{31}$P-NMR [δ in ppm]; Verbrennungsanalyse (in %): berechnet / gefunden</th></tr>
<tr><td>17</td><td>Gemisch aus<br>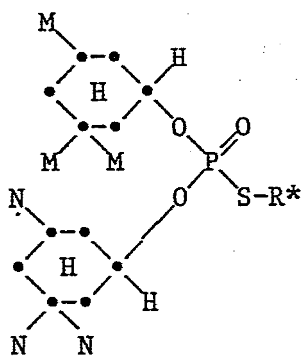<br>wobei<br><table><tr><td>M</td><td>H</td><td>$CH_3$</td><td>H</td></tr><tr><td>N</td><td>H</td><td>$CH_3$</td><td>$CH_3$</td></tr></table><br>(Anmerkung: hergestellt aus 1 Mol Cyclohexanol und 1 Mol Trimethylcyclohexanol)</td><td>gelbliche Flüssigkeit</td><td></td></tr>
</table>

* R = 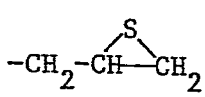

Anwendungsbeispiele 18 bis 35

Es werden 16 erfindungsgemässe Schmierstoffzusammensetzungen nach der ASTM-Standard-Methode D 2783-81 (extreme pressure and wear lubricant test for oils and greases, four ball-machine) unter Verwendung des Shell-Vierkugel-Apparates untersucht.

Die Versuchsergebnisse sind in der Tabelle 2 zusammengestellt.

Tabelle 2

| Anwendungsbeispiel | (a) Basisöl | (b) Verbindung bzw. Verbindungen der Formel I gemäss Beispiel Nr. | Konz. der Verbindung(en) (b) im Basisöl (a) (in Gew.-%) | W.L. (kg) | W.S.D. (mm) |
|---|---|---|---|---|---|
| 18 | Vitrea 100® | ohne | -- | 160 | 0,9 |
| 19 | Vitrea 100® | 2 | 1% | 280 | 0,4 |
| 20 | Vitrea 100® | 4 | 1% | 240 | 0,4 |
| 21 | Vitrea 100® | 5 | 1% | 280 | 0,3 |
| 22 | Vitrea 100® | 7 | 1% | 240 | 0,4 |
| 23 | Vitrea 100® | 9 | 1% | 240 | 0,45 |
| 24 | Catenex P 941® | ohne | - | 145 | 0,9 |
| 25 | Catenex P 941® | 1 | 1% | 180 | 0,5 |
| 26 | Catenex P 941® | 5 | 1% | 240 | 0,4 |
| 27 | Catenex P 941® | 6 | 1% | 200 | 0,5 |
| 28 | Catenex P 941® | 7 | 1% | 220 | 0,5 |
| 29 | Catenex P 941® | 9 | 1% | 200 | 0,4 |
| 30 | Catenex P 941® | 12 | 1% | 220 | 0,45 |
| 31 | Catenex P 941® | 13 | 1% | 200 | 0,35 |
| 32 | Catenex P 941® | 14 | 1% | 260 | 0,4 |
| 33 | Catenex P 941® | 15 | 1% | 240 | 0,4 |
| 34 | Catenex P 941® | 16 | 1% | 260 | 0,45 |
| 35 | Catenex P 941® | 17 | 1% | 240 | 0,45 |

W.L. = Weld Load (Schweisslast). Das ist die Last, bei der die 4 Kugeln innerhalb von 10 Sekunden zusammenschweissen.

W.S.D. = Wear Scar Diameter. Das ist der mittlere Verschleissdurchmesser bei einer Belastung von 40 kg während 1 Stunde.

Vitrea 100® und Catenex P 941® sind Basisöle der Firma Shell.

Die Prüfungsergebnisse zeigen, dass die Verwendung der erfindungsgemäss in Betracht gezogenen Verbindungen der Formel I in einem Schmieröl das Lasttragevermögen und den Verschleiss im hohen Mass verbessern, dies im Vergleich zu einem Schmieröl, das keinen Zusatz enthält.

Patentansprüche

1. Schmierstoffzusammensetzungen enthaltend

a) ein mineralisches und/oder ein synthetisches Basisöl,

b) mindestens eine Verbindung der Formel I

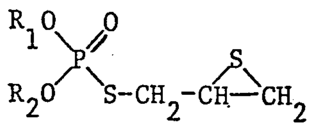

(I), in welcher

$R_1$ und $R_2$ unabhängig voneinander $C_1$-$C_{24}$ Alkyl, das unsubstituiert oder durch 1 oder 2 Chloratome substituiert oder durch 1 oder 2 Sauerstoff- oder Schwefelatome unterbrochen sein kann, $C_5$-$C_{24}$ Cycloalkyl, $C_7$-$C_9$ Aralkyl, unsubstituiertes oder durch 1 bis 3 Reste $C_1$-$C_{24}$ Alkyl, $-OR_3$ oder $-SR_3$ substituiertes Aryl bedeuten, wobei $R_3$ -H, $C_1$-$C_{24}$ Alkyl, unsubstituiertes oder durch $C_1$-$C_{12}$ Alkyl substituiertes Phenyl, Naphthyl oder $C_7$-$C_9$ Aralkyl bedeutet, ferner $R_1$ und $R_2$ unabhängig voneinander eine Gruppe der Formel II

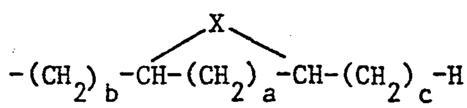

(II) sind,

wobei X für -O-, -S-, -SS- oder $-CH_2S-$ steht, a eine ganze Zahl von 0 bis 5 und b und c eine ganze Zahl von 0 bis 22 sind, mit der Massgabe, dass b + c eine Zahl nicht grösser als 22 darstellt, oder $R_1$ und $R_2$ zusammen $C_2$-$C_{12}$ Alkylen bedeuten, das durch 1 oder 2 Sauerstoff- oder Schwefelatome unterbrochen sein kann, oder $R_1$ und/oder $R_2$ ein zweiwertiger Rest der Formeln III, IV oder V

$-[CH(R_4)CH_2O]_m-A$, (III) $\quad$ $-(C_nH_{2n})-O-A$ , (IV) $\quad$ $-(C_rH_{2r})-S-(C_rH_{2r})-O-A$ sind, (V)

so dass Oligomere dabei entstehen können, wobei

m eine ganze Zahl von 1 bis 4,

n eine ganze Zahl von 2 bis 10, und

r eine ganze Zahl von 3 bis 18 sind,

$R_4$ -H oder $-CH_3$ bedeutet und
A für den Rest der Formel VI

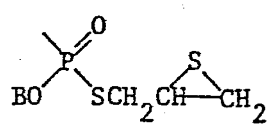

(VI) steht, wobei

B für den Rest $R_1$ oder $R_2$ steht und $R_1$ und $R_2$ einen zweiwertigen Rest der oben angegebenen Bedeutung darstellen, und

c) gegebenenfalls weitere Schmierstoffzusätze,

wobei das Basisöl a) 0,05 bis 5 Gew.-%, bezogen auf das Basisöl, der Verbindung der Formel I enthält.

2. Schmierstoffzusammensetzungen enthaltend mindestens eine Verbindung der Formel I gemäss Anspruch 1, in welcher $R_1$ und $R_2$ unabhängig voneinander $C_1$-$C_{24}$ Alkyl, das unsubstituiert oder durch 1 oder 2 Sauerstoff- oder Schwefelatome unterbrochen sein kann, $C_5$-$C_{24}$ Cycloalkyl, Benzyl oder unsubstituiertes oder durch 1 bis 3 Reste $C_1$-$C_{12}$ Alkyl, $-OR_3$ oder $-SR_3$ substituiertes Phenyl, wobei $R_3$ -H, $C_1$-$C_{24}$ Alkyl, unsubstituiertes oder durch $C_1$-$C_{12}$ Alkyl substituiertes Phenyl ist, oder $R_1$ und $R_2$ unabhängig voneinander Thiiranyl oder 3-Thietanyl oder einen Rest der Formel IV darstellen, wobei B $C_4$-$C_{16}$ Alkyl, Cyclohexyl oder Phenyl ist, oder $R_1$ und $R_2$ zusammen $C_5$-$C_{12}$ Alkylen bedeuten, das durch 1 oder 2 Sauerstoff- oder Schwefelatome unterbrochen sein kann.

3. Schmierstoffzusammensetzungen enthaltend mindestens eine Verbindung der Formel I gemäss Anspruch 1, in welcher $R_1$ und $R_2$ unabhängig voneinander $C_4$-$C_{16}$ Alkyl, Cyclohexyl, Phenyl oder einen Rest der Formel IV bedeuten, wobei B $C_4$-$C_{16}$ Alkyl, Cyclohexyl oder Phenyl ist, oder $R_1$ und $R_2$ zusammen $C_5$-$C_9$ Alkylen bedeuten.

4. Schmierstoffzusammensetzung nach Anspruch 1, dadurch gekennzeichnet, dass sie als weiteren Schmierstoffzusatz einen solchen aus der Reihe der Antioxidantien, Metallpassivatoren, Rostinhibitoren, Viskositätsindexverbesserer, Stockpunkterniedriger, Dispergierungsmittel, Detergentien oder Verdicker sowie weitere bekannte Antiverschleiss- und Hochdruckmittel und Reibungsverminderer, oder ein Gemisch mehrerer dieser Substanzen, enthält.

5. Eine Verbindung der Formel I*

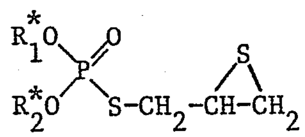

(I*), in welcher

$R_1^*$ und $R_2^*$ unabhängig voneinander $C_1$-$C_{24}$ Alkyl, das durch 1 oder 2 Sauerstoff- oder Schwefelatome unterbrochen sein kann, jedoch nicht beide gleichzeitig $C_1$-$C_{24}$ Alkyl, wenn das $C_1$-$C_{24}$ Alkyl nicht durch wenigstens 1 Sauerstoff- oder Schwefelatom unterbrochen ist, oder in welcher ferner $R_1^*$ und $R_2^*$ unabhängig voneinander $C_5$-$C_{24}$ Cycloalkyl, $C_7$-$C_9$ Aralkyl, unsubstituiertes oder durch 1 bis 3 Reste $C_1$-$C_{24}$ Alkyl, $-OR_3$ oder $-SR_3$ substituiertes Aryl bedeuten, wobei $R_3$ -H, $C_1$-$C_{24}$ Alkyl, unsubstituiertes oder durch $C_1$-$C_{12}$ Alkyl substituiertes Phenyl, Naphthyl oder $C_7$-$C_9$ Aralkyl bedeutet, ferner $R_1^*$ und $R_2^*$ unabhängig voneinander eine Gruppe der Formel II

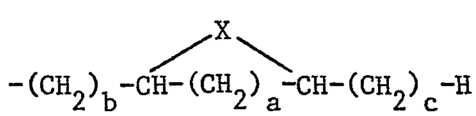

(II) sind,

wobei X für -O-, -S-, -SS- oder $-CH_2S-$ steht, a eine ganze Zahl von 0 bis 5 und b und c eine ganze Zahl von 0 bis 22 sind, mit der Massgabe, dass b + c eine Zahl nicht grösser als 22 darstellt, oder $R_1^*$ und $R_2^*$ zusammen $C_2$-$C_{12}$ Alkylen bedeuten, das durch 1 oder 2 Sauerstoff- oder Schwefelatome unterbrochen sein kann, oder $R_1^*$ und/oder $R_2^*$

ein zweiwertiger Rest der Formeln III, IV oder V

$-[CH(R_4)CH_2O-]_m-A$, $-(C_nH_{2n})-O-A$, $-(C_rH_{2r})-S-(C_rH_{2r})-O-A$ sind,

(III) (IV) (V)

so dass Oligomere dabei entstehen können, wobei

m eine ganze Zahl von 1 bis 4,

n eine ganze Zahl von 2 bis 10, und

r eine ganze Zahl von 3 bis 18 sind,

$R_4$ $-H$ oder $-CH_3$ bedeutet und

A für den Rest der Formel VI

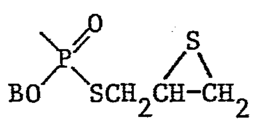

(VI) steht, wobei

B für den Rest $R_1^*$ oder $R_2^*$ steht und $R_1^*$ und $R_2^*$ einen zweiwertigen Rest der oben angegebenen Bedeutung darstellen.

6. Eine Verbindung der Formel $I^*$ gemäss Anspruch 5, in welcher $R_1^*$ $C_1$-$C_{24}$ Alkyl, $C_5$-$C_{24}$ Cycloalkyl, Benzyl, unsubstituiertes oder durch 1 bis 3 Reste $C_1$-$C_{12}$ Alkyl substituiertes Phenyl, Thiiranyl oder 3-Thietanyl bedeutet, und $R_2^*$ $C_5$-$C_{24}$ Cycloalkyl, Benzyl, unsubstituiertes oder durch 1 bis 3 Reste $C_1$-$C_{12}$ Alkyl substituiertes Phenyl ist oder einen Rest der Formel VII

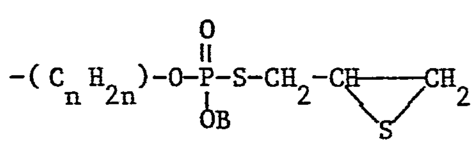

(VII)

darstellt, worin B für den Rest $R_1^*$ steht und n eine natürliche Zahl von 2 bis 10 ist, oder in welcher $R_1^*$ und $R_2^*$ zusammen $C_5$-$C_{12}$ Alkylen bedeuten, das durch 1 oder 2 Sauerstoff- oder Schwefelatome unterbrochen sein kann.

7. Eine Verbindung der Formel $I^*$ gemäss Anspruch 6, in welcher $R_1^*$ $C_4$-$C_{16}$ Alkyl, unsubstituiertes oder durch $C_1$-$C_{12}$ Alkyl substituiertes Cyclohexyl oder Phenyl ist, und $R_2^*$ unsubstituiertes oder durch $C_1$-$C_{12}$ Alkyl substituiertes Cyclohexyl oder Phenyl ist oder einen Rest der Formel VII

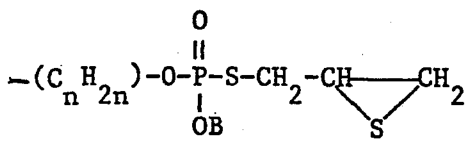

(VII)

darstellt, worin B für den Rest $R_1^*$ steht und n eine natürliche Zahl von 2 bis 10 ist.

8. Verwendung von mindestens einer Verbindung der Formel I gemäss Anspruch 1 als Schmierstoffzusatz.

9. Verwendung gemäss Anspruch 8, wobei die Verbindungen der Formel I einzeln oder im Gemisch dem Basisöl zugemischt werden.

FO 7.3 RU/MP/as*/cw*/rn*